# EUROPÄISCHE PATENTSCHRIFT

(11) **EP 1 102 142 B1**
(45) Veröffentlichungstag und Bekanntmachung des Hinweises auf die Patenterteilung: **15.03.2006**
(21) Anmeldenummer: 00203594.7
(22) Anmeldetag: 16.10.2000
(51) Int. Cl.: G05D 23/02

(54) **Ventil, insbesondere Thermostatventil für Heizungsanlagen**
Valve, in particular a thermostatic valve for heating systems
Robinet, en particulier un robinet thermostatique pour installations de chauffage

(30) Priorität: 17.11.1999 DE 19955259
(43) Veröffentlichungstag der Anmeldung: 23.05.2001
(73) Patentinhaber: Danfoss A/S, 6430 Nordborg (DK)
(72) Erfinder: Wiwe, Joergen Seindal, 8355 Solbjerg (DK); Garm, Fester, 8600 Silkeborg (DK); Hoelck, Poul, 8330 Beder (DK)

(56) Entgegenhaltungen:
- DE-A- 2 546 213
- DE-A- 4 344 773
- DE-U- 29 905 078

## Beschreibung

Die Erfindung bezieht sich auf ein Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung, die eine zum Befestigen eines Betätigungsaufsatzes geeignete erste Form hat.

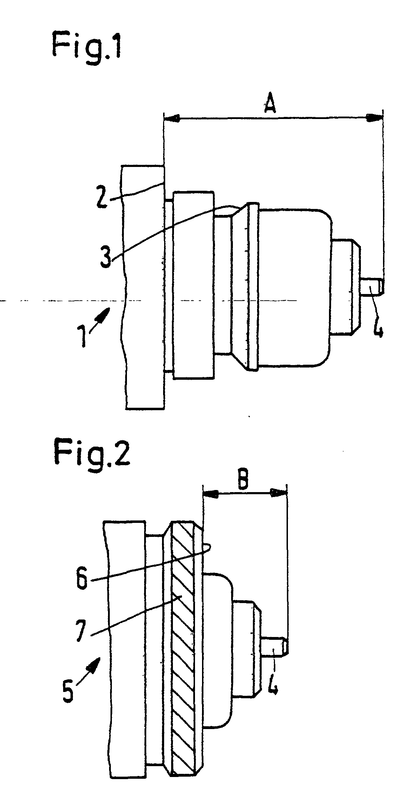

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt. Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise etwa 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß die Anschlußvorrichtung mindestens ein relativ zum Gehäuse in Richtung der Stiftachse verstellbares Anschlußelement aufweist und durch Verstellung dieses mindestens einen Anschlußelements eine zum Befestigen eines zweiten Typs eines Betätigungsaufsatzes geeignete zweite Form annimmt.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind.

Günstig ist es, daß beide Formen eine Anlagefläche aufweisen, von denen die Anlagefläche der ersten Form einen größeren Abstand vom freien Ende des Stifts hat als die Anlagefläche der zweiten Form. In vielen Fällen genügt es, eine Axialverschiebung dieser Art vorzunehmen, um zwei verschiedene Formen einer Anschlußvorrichtung vorzusehen.

Empfehlenswert ist es, daß beide Formen je einen der Anlagefläche zugeordneten Spannbereich aufweisen, der bei der ersten Form durch eine Konusfläche kleineren Außendurchmessers und bei der zweiten Form durch ein Außengewinde größeren Durchmessers gebildet ist. Mit diesen beiden Formen läßt sich der weitaus größte Teil der auf dem Markt befindlichen Betätigungsaufsätze am Ventil anbringen.

Vorteilhaft ist es, daß ein äußeres Anschlußelement, das eine in beiden Formen wirksame Anlagefläche trägt, an der Außenseite des Gehäuses geführt ist. Die Nutzung der Anlagefläche in beiden Formen bringt Vereinfachungen mit sich.

Alternativ ist es von Vorteil, daß ein äußeres Anschlußelement, das eine in beiden Formen wirksame Anlagefläche trägt, an der Innenseite einer Gehäusewand vergrößerten Durchmesser geführt ist. Durch die Führung an der Innenseite ist das äußere Anschlußelement teilweise geschützt untergebracht.

Vorzugsweise ist dafür gesorgt, daß das äußere Anschlußelement auch das den Spannbereich der zweiten Form bildende Außengewinde aufweist. Durch einfaches Verschieben kann dieses Außengewinde wirksam gemacht werden.

Empfehlenswert ist es auch, daß ein inneres Anschlußelement, das mit der Dichtvorrichtung verbunden ist, an der Innenseite des Gehäuses geführt ist. Auf diese Weise kann der Abstand zwischen der Anlagefläche und dem freien Ende des Stiftes geändert werden. Das innere Anschlußelement kann auch in Kombination mit einem äu-βeren Anschlußelement verwendet werden.

Hierbei ist es günstig, daß das innere Anschlußelement die den Spannbereich der ersten Form bildende Konusfläche aufweist. Die Konusfläche gelangt beim Einwärtsschieben in eine unwirksame Lage.

Vorteilhaft ist es, daß der Stift über eine Ausgleichskupplung mit dem Verschlußstück verbunden ist. Diese Ausgleichskupplung, die vorzugsweise als Reibungskupplung ausgebildet ist, verkürzt den Abstand zwischen dem Stift und dem Verschlußstück. Der Ventilsitz kann daher gehäusefest ausgebildet sein oder eine feste Zuordnung zum Gehäuse haben.

Bei einer bevorzugten Ausführungsform ist dafür gesorgt, daß die Konusfläche in festem Abstand zur Dichtvorrichtung am Gehäuse ausgebildet sind und ein äußeres Anschlußelement, das das Außengewinde und die beiden Formen gemeinsame Anlagefläche aufweist, das einzige verstellbare Anschlußelement bildet. Da nur ein Anschlußelement verstellt werden muß, ergibt sich eine hohe Bedienungsfreundlichkeit.

Eine ebenfalls bevorzugte Alternative besteht darin, daß am Gehäuse das Außengewinde und die in beiden Formen wirksam Anlagefläche ausgebildet sind und ein inneres Anschlußelement, das die Konusfläche in festem Abstand zur Dichtvorrichtung trägt, das einzige verstellbare Anschlußelement bildet.

Günstig ist es, daß der Verstellweg des mindestens einen Anschlußelements durch Anschläge begrenzt ist. Die Lage des Anschlußelements ist daher definiert.

Empfehlenswert ist es auch, daß das mindestens eine verstellbare Anschlußelement so ausgelegt ist, daß die Anschlußvorrichtung eine dritte Form zum Befestigen eines dritten Typs eines Betätigungsaufsatzes annimmt. Es lassen sich daher auch mehr als zwei Formen von Anschlußvorrichtungen vorsehen.

Dies kann insbesondere dadurch geschehen, daß das mindestens eine Anschlußelement in einer Zwischenstellung des Verstellwegs arretierbar ist.

Bei einer bevorzugten Ausführungsform ist dafür gesorgt, daß eine Sperrvorrichtung die Verstellbewegung des mindestens einen Anschlußelements von der einen zur anderen Form zuläßt, die Rückbewegung dagegen sperrt. Die eine Anschlußvorrichtung hat daher Priorität, wird aber unwirksam, wenn in die andere Form umgeschaltet worden ist.

Von Vorteil ist es auch, daß das Gehäuse Profilierungen zur Drehsicherung des Betätigungsaufsatzes aufweist, die sowohl dem ersten als auch dem zweiten Typ des Betätigungsaufsatzes angepaßt sind. Damit wird in beiden Fällen eine Drehsicherung erreicht.

Besonders empfehlenswert ist hierbei, daß bei den Drehsicherungs-Profilierungen ein Außensechskant und eine Anzahl von achsparallelen Rillen kombiniert sind. Diese Profilierungen decken den größten Teil der auf dem Markt befindlichen Betätigungsaufsätze ab.

Die Erfindung wird im folgenden anhand bevorzugter Ausführungsbeispiele in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorrichtung für einen zweiten Typ eines Betätigungsaufsatzes gemäß dem Stand der Technik,
- Fig. 3: einen Längsschnitt durch ein Ventil gemäß der Erfindung mit einer Anschlußvorrichtung entsprechend Fig. 1,
- Fig. 4: einen Längsschnitt durch das Ventil der Fig. 3 mit einer Anschlußvorrichtung entsprechend Fig. 2,
- Fig. 5: einen Längsschnitt durch ein anderes erfindungsgemäßes Ventil mit dem Anschlußelement in einer ersten Stellung,
- Fig. 6: einen Längsschnitt ähnlich Fig. 5 mit dem Schiebeteil in einer zweiten Stellung,
- Fig. 7: einen Längsschnitt ähnlich Fig. 5 mit dem Schiebeteil in einer dritten Stellung,
- Fig. 8: eine Hülse mit Führungsbahn,
- Fig. 9: einen Längsschnitt durch ein weiteres Ventil gemäß der Erfindung mit einer Anschlußvorrichtung entsprechend Fig. 1,
- Fig. 10: einen Längsschnitt durch das Ventil der Fig. 9 mit einer Anschlußvorrichtung entsprechend Fig. 2,
- Fig. 11: einen Längsschnitt durch ein abgewandeltes Ventil gemäß der Erfindung mit einer Anschlußvorrichtung entsprechend Fig. 1,
- Fig. 12: einen Längsschnitt durch das Ventil der Fig. 11 mit einer weiteren Anschlußvorrichtung und
- Fig. 13: einen Längsschnitt durch das Ventil der Fig. 11 mit einer Anschlußvorrichtung entsprechend Fig. 2,
- Fig. 14: einen Längsschnitt durch ein anderes Ventil gemäß der Erfindung mit einer Anschlußvorrichtung entsprechend Fig. 1,
- Fig. 15: einen Längsschnitt durch das Ventil gemäß Fig. 14 mit einer Anschlußvorrichtung entsprechend Fig. 2,
- Fig. 16: einen Längsschnitt durch eine weitere Ausführungsform eines erfindungsgemäßen Ventils, wobei in der oberen Hälfte die eine und in der unteren Hälfte die andere Form einer Anschlußvorrichtung gezeigt ist,
- Fig. 17: einen Teilschnitt längs der Linie X-X der Fig. 18,
- Fig. 18: eine Draufsicht auf das Gehäuse gemäß Fig. 17,
- Fig. 19: einen Längsschnitt durch ein Ventil gemäß der Erfindung mit einer Anschlußvorrichtung entsprechend Fig. 1,
- Fig. 20: einen Längsschnitt durch das Ventil gemäß Fig. 19 mit einer Anschlußvorrichtung entsprechend Fig. 2,
- Fig. 21: einen Längsschnitt durch eine andere Ausführungsform eines erfindungsgemäßen Ventils mit einer Anschlußvorrichtung entsprechend Fig. 1 und
- Fig. 22: einen Längsschnitt durch das Ventil gemäß Fig. 21 mit einer Anschlußvorrichtung entsprechend Fig. 2.

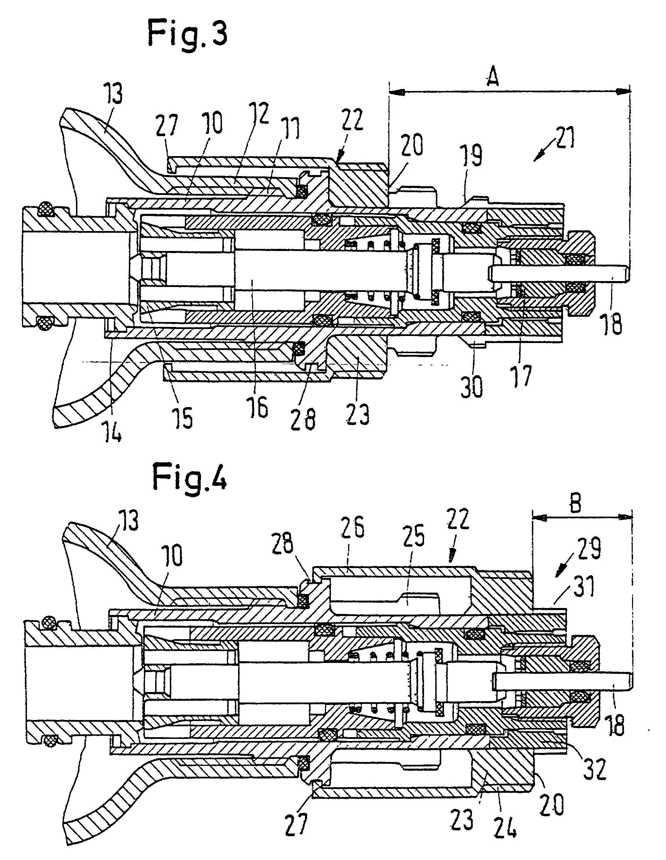

In den Fig. 3 und 4 ist ein Gehäuse 10 mittels eines Außengewindes 11 in einen Stutzen 12 eines Heizkörpers 13 eingeschraubt. Das Gehäuse trägt einen Ventilsitz 14, der mit einem Verschlußstück 15 zusammenwirkt. Das Verschlußstück ist über einen Ventilschaft 16 und einen durch eine Dichtvorrichtung 17 herausgeführten Ventilstift 18 bei aufgespanntem Betätigungsaufsatz mit dessen Betätigungselement gekuppelt.

Am Gehäuse 10 ist außen als erste Spannfläche eine Konusfläche 19 angebracht, der eine Anlagefläche 20 zugeordnet ist. Dies ergibt eine Anschlußvorrichtung 21 mit einer Form, die geeignet ist zur Befestigung eines ersten Typs eines Betätigungsaufsatzes. Der Abstand A zwischen der Anlagefläche 20 und dem freien Ende des Ventilstiftes 18 beträgt etwa 30 mm.

Ein Anschlußelement 22 weist einen Ring 23 auf, der an seiner Außenseite als zweite Spannfläche ein Außengewinde 24 und an seiner Stirnfläche die Anlagefläche 20 trägt. Der Ring 23 besitzt an der Innenseite Axialschlitze, in die Längsrippen 25 des Gehäuses greifen. Der Ring läßt sich daher achsparallel aus der Stellung der Fig. 3 in die Stellung der Fig. 4 verschieben. Sicherungselemente 26 bestehen aus federnden Fingern, die an die Rückseite des Ringes 23 anschließen. Sie weisen eine federnde Raste 27 auf, die bei Erreichen der zweiten Stellung in eine Nut 28 einfällt und daher diese zweite Stellung irreversibel festlegt.

In dieser zweiten Stellung ergibt sich eine zweite Anschlußvorrichtung 29 mit einer Form, die zur Befestigung eines zweiten Typs eines Betätigungsaufsatzes geeignet ist. Hier ist die Anlagefläche 20 wiederum zur Anlage des Sockels eines Betätigungsaufsatzes wirksam. Ihr Abstand B vom freien Ende des Ventilstifts 18 beträgt etwa beispielsweise etwa 10 mm.

Durch die Längsrippen 25 ist das Anschlußelement 22 gegen Drehung gesichert. Übliche Profilierungen 30 am Gehäuse 10 dienen der Drehsicherung des Betätigungsaufsatzes vom ersten Typ, Profilierungen 31, z.B. ein Sechskant, an der Außenseite eines Ringes 32 zur Voreinstellung des kᵥ-Wertes der Drehsicherung eines Betätigungsaufsatzes vom zweiten Typ.

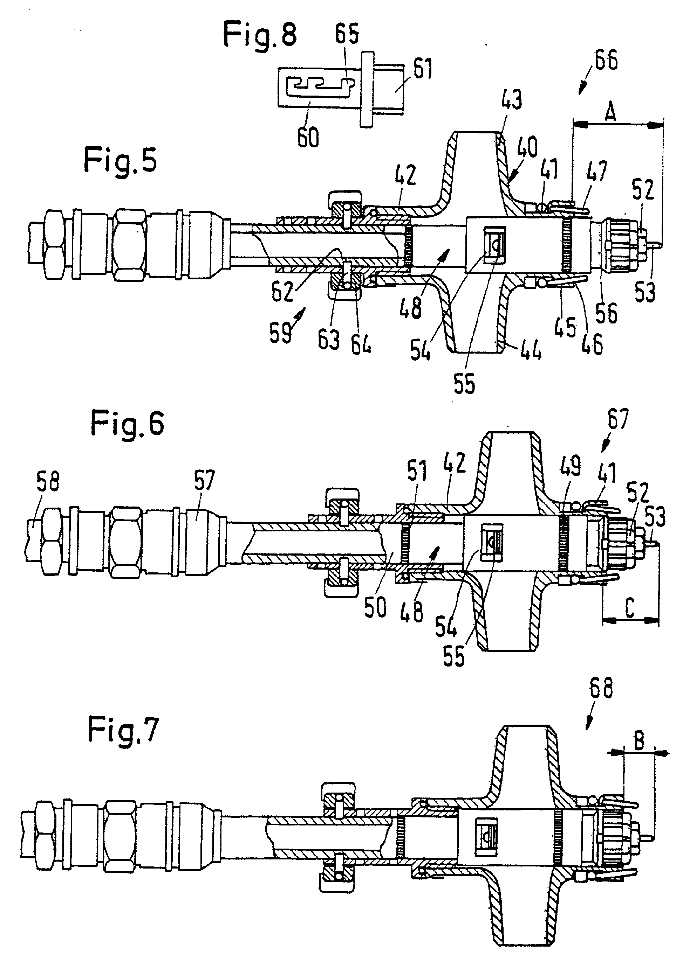

Das in den Fig. 5 bis 8 veranschaulichte Ventil weist ein Gehäuse 40 auf, das ein Anschlußende 41, einen gegenüberliegenden Zufluß-Stutzen 42, und zwei Abflußstutzen 43 und 44 besitzt. Das Gehäuse 40 trägt am Anschlußende 41 ein Außengewinde 45, eine Anlagefläche 46 für den Sockel eines Betätigungsaufsatzes und Stifte 47 zur Drehsicherung wenigstens eines Betätigungsaufsatzes. Das Außengewinde hat die Abmessungen M30 x 1,5 mm.

Im Gehäuse 40 ist ein Anschlußelement 48 angeordnet, das einerseits unter Zwischenschaltung eines Dichtringes 49 in das Anschlußende 41 des Gehäuses 40 greift und andererseits mit einem Fortsatz 50 unter Zwischenschaltung eines Dichtringes 51 den Stutzen 42 durchsetzt. Der Mittelteil des Anschlußelements 48 hat demnach die Form eines abgesetzten Zylinders, der lang genug ist, um in den beiden Endstellungen noch durch die beiden Dichtungen nach außen hin abgedichtet zu sein.

Das Anschlußelement 48 trägt eine Dichtvorrichtung 52, einen Stift 53 zur Ventilbetätigung, einen Ventilsitz 54, ein Verschlußstück 55, eine Konusfläche 56 und weitere übliche Ventilteile, wie Rückstellfeder, Voreinstellvorrichtung für den kv-Wert und dergleichen.

Am Fortsatz 50 ist eine Kupplung 57 angebracht, mit der ein Schlauch 58 angeschlossen werden kann. Die Kupplung 57 kann eine Schnappverbindung aufweisen.

Eine Arretiervorrichtung 49 weist eine Führungsbahn 60 in einer in den Zuflußstutzen 42 eingeschraubten Hülse 61 auf. Der Fortsatz 50 besitzt Arretierungsvertiefungen 62. Arretierstifte 63, die durch einen äußeren Ring 64 gesichert sind, durchsetzen die Führungsbahn 60 und greifen in die Arretiervertiefungen 62 ein. Der Ring 64 kann aus zwei oder mehr Teilen bestehen, die durch einen elastischen Ring zusammengehalten sind. Weil der Dichtring 51 einen kleineren Durchmesser hat als der Dichtring 49, wird im Betrieb des Ventils eine in Richtung auf das Anschlußende wirkende Kraft auf das Anschlußelement 48 ausgeübt. Infolgedessen werden die Arretierstifte sicher in einem Endabschnitt 65 der Führungsbahn 60 gehalten. Durch Axialverschiebung des Anschlußelements 48 in Richtung auf den Einlaßstutzen 42, Drehung um einen vorgegebenen Winkel, weitere Axialverschiebung, sowie Drehung in entgegengesetzter Richtung kommt es zu einer Verlagerung der Arretierstifte 63 und damit zu einer Verstellung des Anschlußelements von einer der in den Figuren gezeigten Stellungen in eine andere in den Figuren gezeigte Stellung.

Bei der Stellung der Fig. 5 wirkt die Konusfläche 56 als Spannfläche für einen Betätigungsaufsatz vom ersten Typ, durch den der Sockel des Aufsatzes gegen die Anlagefläche 46 gedrückt wird. Hierdurch ergibt sich ein Abstand A zwischen der Anlagefläche 46 und dem freien Ende des Stiftes 53 von etwa 30 mm.

Bei den Stellungen den Fig. 6 und 7 ist die Konusfläche 56 vom Gehäuse 40 überdeckt. Wirksam ist nun das Außengewinde 45 in Verbindung mit der Anlagefläche 46. Das Außengewinde dient als Spannfläche, um eine Überwurfmutter mit Innenflansch aufzunehmen, der den Sockel eines Betätigungsaufsatzes vom zweiten und dritten Typ gegen die Anlagefläche 46 drückt. Hier ergibt sich zwischen der Anlagefläche 46 und dem freien Ende des Stifts 53 ein Abstand B von etwa 10 mm bzw. C von etwa 20 mm.

Insgesamt ergeben sich daher drei Anschlußvorrichtungen 66, 67 und 68, die es erlauben, Betätigungsaufsätze von drei verschiedenen Typen anzubringen.

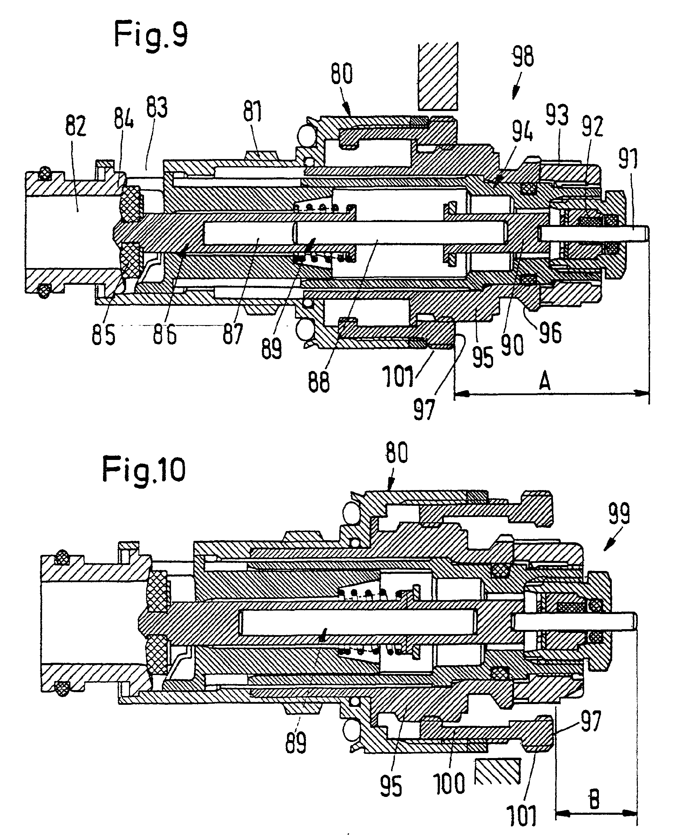

Die Fig. 9 und 10 zeigen ein Einbauventil, dessen Gehäuse 80 mittels eines Außengewindes 81 in einen Heizkörper eines Heizungssystems eingeschraubt werden kann. Das Gehäuse 80 weist einen Zuflußstutzen 82 und eine Abflußöffnung 83 sowie dazwischen einen Ventilsitz 84 auf, mit dem ein Verschlußstück 85 zusammenwirkt.

Das Verschlußstück 85 ist über eine Ventilstange 86, die mit einer Bohrung 87 versehen ist, sowie eine Stange 88, die mit der Bohrung 87 eine Ausgleichskupplung 89 bildet, und ein weiteres Zwischenstück 90 mit einem Stift 91 verbunden, der von einem aufgespannten Betätigungsaufsatz verschoben wird. Der Stift 91 durchsetzt eine Dichtvorrichtung 92, die ihrerseits von einem Verstellring 93 einer Voreinstellvorrichtung 94 für den kᵥ-Wert umgeben ist.

Ein im Gehäuse 80 angeordnetes inneres Anschlußelement 95 trägt die Dichtvorrichtung 92 und eine als erste Spannfläche dienende Konusfläche 96. Dieser Konusfläche ist eine Anlagefläche 97 zugeordnet, so daß sich eine Anschlußvorrichtung 98 entsprechend Fig. 1 mit dem Abstand A zwischen der Anlagefläche 97 und dem freien Ende des Stiftes 91 ergibt.

Eine Anschlußvorrichtung 99 gemäß Fig. 2 ergibt sich auf folgende Weise: Das im Gehäuse 80 angeordnete innere Anschlußelement 95 wird in das Ventilgehäuse 80 bis zum Anschlag hineingedrückt. Gleichzeitig wird ein ebenfalls im Gehäuse geführtes äußeres Anschlußelement 100 in entgegengesetzter Richtung bewegt. Es weist nicht nur die Anlagefläche 97 sondern auch ein Außengewinde 101 mit den Abmessung M30 x 1,5 auf. Beim Einwärtsschieben des Anschlußelements 95 tritt die Ausgleichskupplung 89 in Tätigkeit. Die Stange 88 wird aufgrund der ausgeübten Kraft in die Bohrung 87 hineingeschoben, wodurch sich der Abstand zwischen dem Stift 91 und dem Verschlußstück 84 verringert.

Das Ventil wird in der Stellung der Fig. 9 geliefert und kann ohne Schwierigkeiten aber irreversibel in die Stellung der Fig. 10 überführt werden.

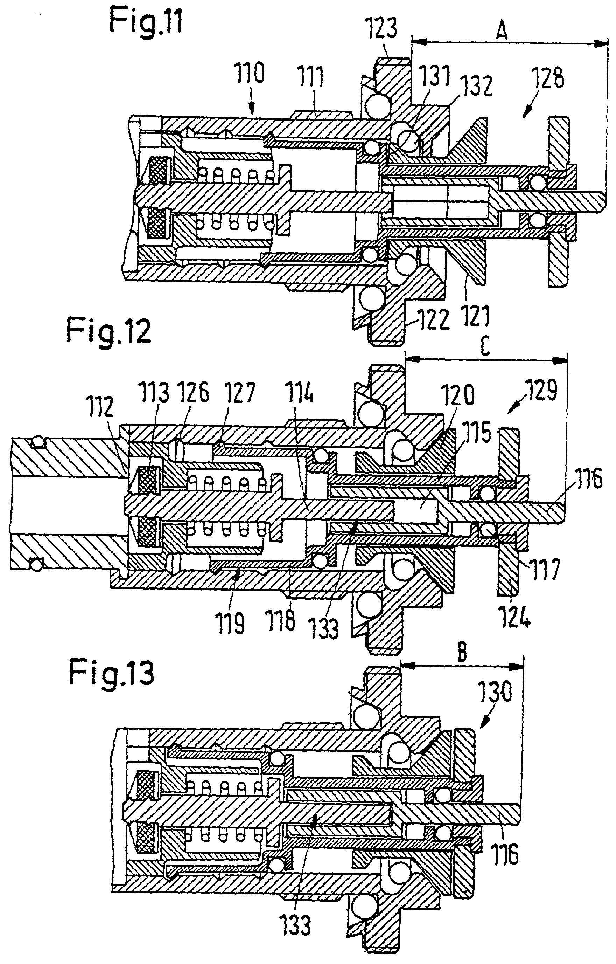

Bei der Ausführungsform der Fig. 11 bis 13 ist wiederum ein Einbauventil veranschaulicht, dessen Gehäuse 110 mittels seines Außengewindes 111 in einen Heizkörper eingeschraubt werden kann. Wiederum arbeitet ein gehäusefester Sitz 112 mit einem Verschlußstück 113 zusammen. Dessen Stange 114 greift (was nur angedeutet ist) reibungsschlüssig in eine Bohrung 115, die mit einem Stift 116 verbunden ist, der durch eine Dichtvorrichtung 117 nach außen geführt ist.

Die Dichtvorrichtung 117 wird vom inneren Teil 118 eines Anschlußelements 119 getragen, während ein äußerer Teil 120, der auf dem inneren Teil axial verschiebbar ist, eine Konusfläche 121 aufweist. Am Gehäuse 110 ist eine Anlagefläche 122 und ein Außengewinde 123 angebracht.

Durch Angreifen an einem Anschlag 124 kann das äußere Teil 118 des Anschlußelements 119 in eine der drei Stellungen der Fig. 11 bis 13 gebracht werden. In diesen Stellungen wird das Teil 118 arretiert, weil mindestens ein Rastvorsprung 125 in eine von drei Rastvertiefungen 126 einrastet. Auf diese Weise ergeben sich die drei Anschlußvorrichtungen 128, 129 und 130. Bei der Anschlußvorrichtung 128 drückt ein Anschlag 131 das äußere Teil 120 des Anschlußelements 119 nach außen, so daß die Konusfläche 121 frei liegt und mit der Anlagefläche 122 zusammenwirken kann. Ein Sprengring 132 sichert das Teil 120 gegen Herausfallen. Dies entspricht der Anschlußvorrichtung der Fig. 1.

Wird das äußere Teil 118 des Anschlußelements 119 in die Stellung der Fig. 12 bewegt, wird die Stange 114 in die Bohrung 115 geschoben, so daß diese Teile eine Ausgleichskupplung 133 bilden, die als Reibungskupplung ausgeführt ist. In dieser Stellung wirkt die Anlagefläche 122 mit dem Außengewinde 133 zusammen, so daß die Anschlußvorrichtung 129 derjenigen der Fig. 2, aber mit einem größeren Abstand C zwischen Anlagefläche und freiem Ende des Stiftes 116 entspricht.

Durch weiteres Einschieben des äußeren Teils 118 des Anschlußelements 119 gelangt man zur Anschlußvorrichtung 130, bei der der Abstand B zwischen Anlagefläche 122 und freiem Ende des Stiftes 116 etwa 10 mm beträgt.

Die Ausgleichskupplung 89, 133 kann auch auf andere Weise verwirklicht werden, beispielsweise durch ein Gewinde. Eine Reibungskupplung könnte auch direkt zwischen Ventilstange und Verschlußstück ausgeführt werden, so daß die Ventilstange durch den Ventilsitz geschoben wird.

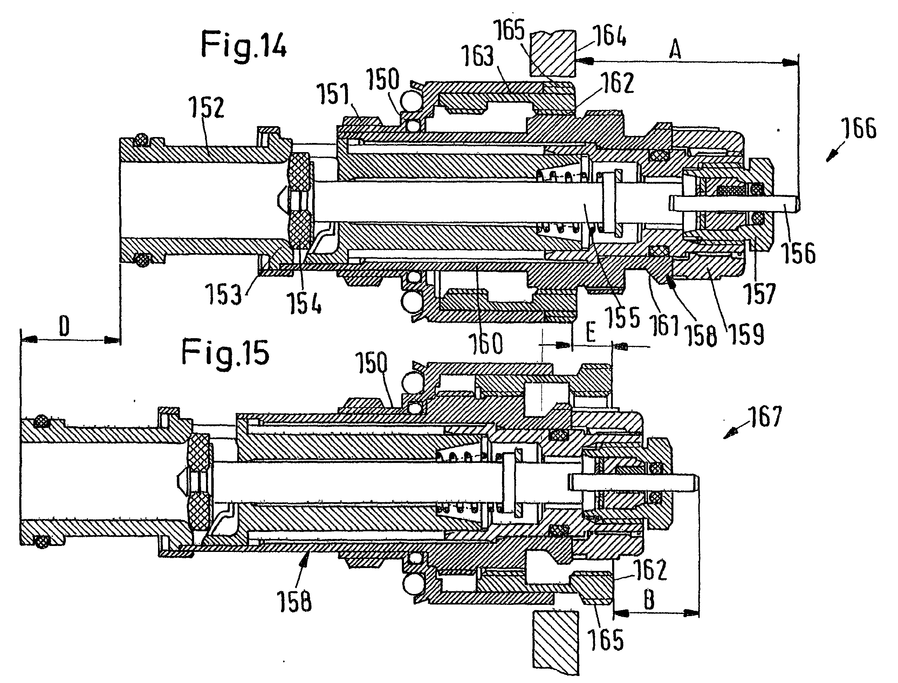

Bei der Ausführungsform nach den Fig. 14 und 15 trägt ein Einbaugehäuse 150 ein Außengewinde 151, mit dem das Ventil in einen Heizkörper eingeschraubt werden kann. Das Gehäuse 150 ist mit einem Fortsatz 152 versehen, der in einen Stutzen eines Heizkörpers eingreifen kann. Das Gehäuse 150 ist mit einem Ventilsitz 153 versehen, der mit einem Verschlußstück 154 zusammenwirkt. Das Verschlußstück 154 ist über einen Ventilschaft 155 mit einem Stift 156 gekuppelt, der durch eine Dichtvorrichtung 157 nach außen geführt ist und dort von einen Betätigungsaufsatz verstellt werden kann.

Das Ventil besitzt ein inneres Anschlußelement 158, das die Dichtvorrichtung 157, einen Verstellring 159 zum Verstellen einer Voreinstellvorrichtung 160 für den kᵥ-Wert und eine Konusfläche 161 aufweist. Diese wirkt als Spannfläche mit einer Anlagefläche 162 zusammen, die an der Stirnseite eines äußeren Anschlußelements 163 ausgebildet ist und mit einer Abdeckung 164 fluchtet. Das äußere Anschlußelement 163 hat die Form einer Hülse und trägt am vorderen Ende ein Außengewinde 165 mit den Abmessungen M30 x 1,5.

Auf diese Weise ergibt sich eine erste Anschlußvorrichtung 166, die der Form der Fig. 1 entspricht. Durch nachstehende Schritte kommt man zu einer Anschlußvorrichtung 167, die der Form der Fig. 2 entspricht. Hier ist der Abstand B zwischen der Anlagefläche 162 und dem freien Ende des Stiftes 156 gleich etwa 10 mm. Zu diesem Zweck wird das innere Anschlußelement 158 um den betrag D einwärts in das Gehäuse 150 verlagert. Außerdem wird das äußere Anschlußelement 163 auswärts aus dem Gehäuse um den Betrag E verlagert. Um den genauen Wert von E einstellen zu können, sind Markierungen o.dgl. am äußeren Anschlußelement 163 und am Gehäuse 150 vorgesehen. In Fig. 14 ist die Anlagefläche 162 in gleicher Höhe wie die Oberfläche der Abdeckplatte 164 angeordnet, in Fig. 15 hat sie einen Abstand von etwa 5 mm hiervon. Der Sockel eines aufgespannten Betätigungsaufsatzes endet daher in Höhe der Abdeckplatte 164 oder kurz darüber, was optisch kaum auffällt. Das äußere Anschlußelement 163 kann im Gehäuse 150 verschraubbar oder, gegebenenfalls nach einer Winkeldrehung aus einer Sperrstellung, verschiebbar sein.

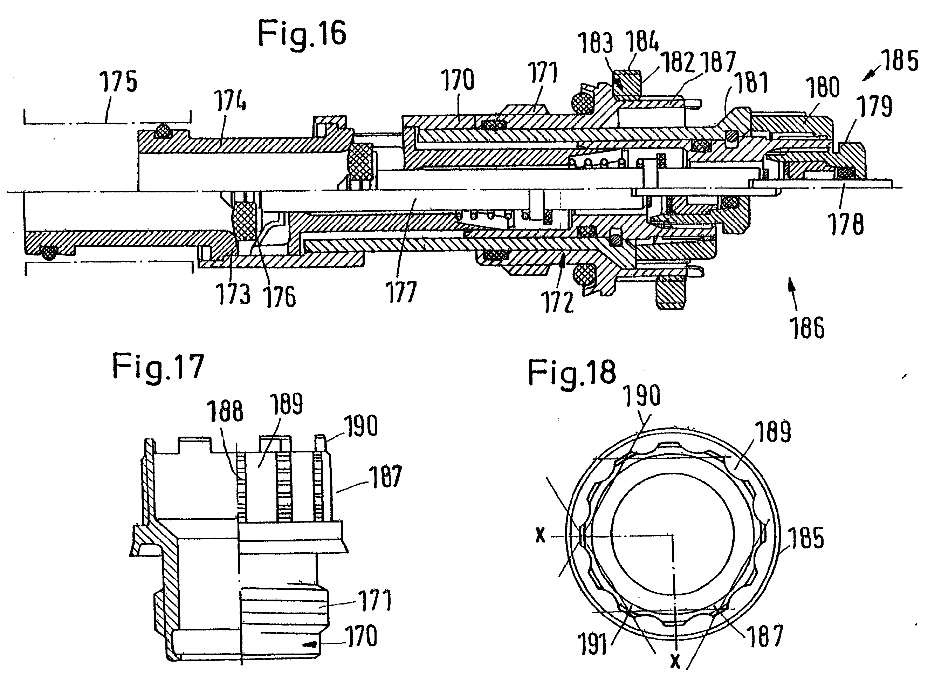

Ein weiteres Ausführungsbeispiel zeigen die Fig. 16 bis 18. Wiederum gibt es ein Einbaugehäuse 170 mit einem Außengewinde 171. Ein inneres Anschlußelement 172 trägt einen Ventilsitz 173 und einen Fortsatz 174, der in einer gestrichelt angedeuteten Bohrung 175 eines Stutzens eines Heizkörpers verschiebbar ist. Ein Verschlußstück 176 ist über einen Ventilschaft 177 mit einem Stift 178 gekuppelt, der durch eine Dichtvorrichtung 179 nach außen geführt ist. Ferner gibt es ein Handrad 180, das zur Verdrehung einer Einstellvorrichtung für den kᵥ₋Wert dient. Zum inneren Anschlußelement 172 gehört auch eine Konusfläche 181, die mit einer Anlagefläche 182 zusammenwirkt. Letztere ist Teil eines äußeren Anschlu-βelements 183, das ein Außengewinde 184 trägt. Somit ergibt sich eine Anschlußvorrichtung 185, die durch Einwärts-Verlagern des inneren Anschlußelements 172 und Auswärts-Verlagern des äußeren Anschlußelements 183 die Form der Fig. 2 einnimmt und somit zur Anschlußvorrichtung 186 wird.

Das Gehäuse 170 besitzt eine nach außen ragende Ringwand 187. Deren Innendurchmesser ist so bemessen, daß das innere Anschlußelement 172 ungehindert um einen vorbestimmten Abstand einwärts geschoben werden kann. An der Außenseite ist ein äußeres Stellgewinde 188 vorgesehen. Es ist durch erste Profilierungen 189 in der Form von nach außen offenen Längsrillen unterbrochen. Am freien Ende ist die Wand 187 mit einer zweiten Profilierung 190 in der Form eines Außensechskants versehen, derart, daß die Wand 187 teilweise völlig unterbrochen ist. In Fig. 18 sind die Begrenzungsflächen des Außensechskants 190 zwecks Deutlichmachung in Verlängerung dargestellt. Die Schnittpunkte ergeben die Ecken 191.

Die erste Profilierung dient zur Drehsicherung bei Betätigungsaufsätzen mit Schnappverschluß, die an der Innenseite den Rillen 189 entsprechende Vorsprünge aufweisen. Die zweite Profilierung dient der Drehsicherung von Betätigungsaufsätzen, die mit einer Überwurfmutter befestigt werden und einen Innensechskant aufweisen.

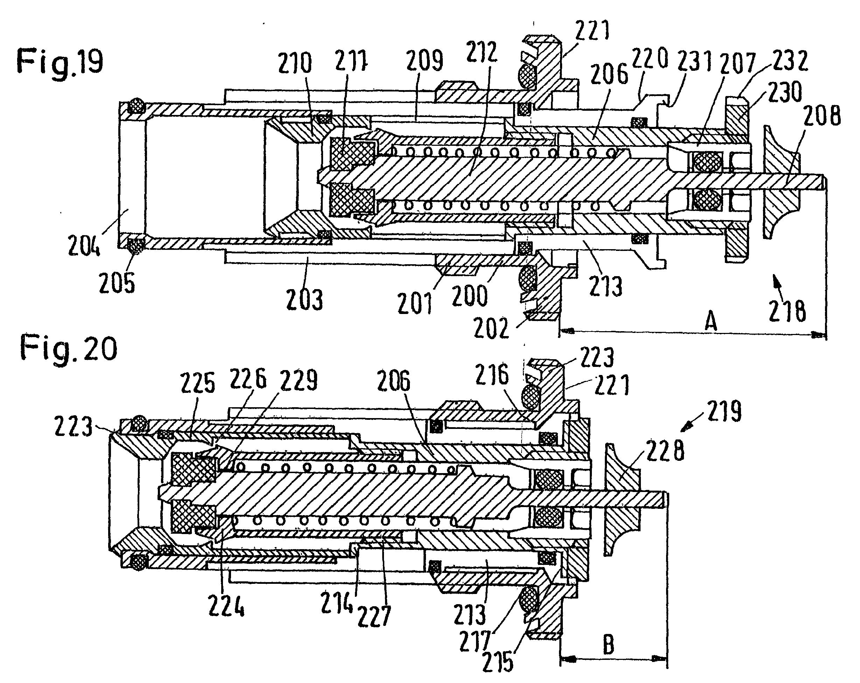

Das Ventil der Fig. 19 und 20 besitzt ein Gehäuse 200, das mit einem Gewinde 201 in einen Gewindestutzen eines nicht veranschaulichten Heizkörpers eingeschraubt werden kann, bis ein mit dem Gehäuse 200 verbundener Ring 202 an der Stirnseite dieses Gewindestutzens zur Anlage kommt. Das Gehäuse 200 trägt über Längsstege 203 einen Anschlußstutzen 204, der außen eine Ringdichtung 205 aufweist, die bei eingebautem Ventil in eine Bohrung des nicht veranschaulichten Heizkörpers greift und dort eine definierte Lage hat.

Ein Anschlußelement 206 trägt eine Dichtvorrichtung 207 für einen nach außen geführten Stift 208 und über Längsstege 209 einen Ventilsitz 210. Dieser arbeitet mit einem Verschlußstück 211 zusammen, das über eine Ventilstange 212 mit dem Stift 208 verbunden ist. Ein Teil des Anschlußelements 206 ist von einem Zusatzelement 213 umgeben. Mitnehmer 214 und 215 am Anschlußelement sorgen dafür, daß das Zusatzelement 213 bei einer Bewegung des Anschlußelements 206 streckenweise mitgenommen wird. Anschläge 216 und 217 am Gehäuse 200 sorgen für eine Bewegungsbegrenzung. Das Ventil kann daher wahlweise in die Stellung der Fig. 3, in der sich eine Anschlußvorrichtung 218 zur Befestigung eines ersten Typs eines Betätigungsaufsatzes ergibt, oder in die Stellung der Fig. 4, in der sich eine Anschlußvorrichtung 219 zur Befestigung eines zweiten Typs eines Betätigungsaufsatzes ergibt, gebracht werden.

Bei der Anschlußvorrichtung 218 (Fig. 19) wirkt beim Anbringen eines Betätigungsaufsatzes eine konusförmige Spannfläche 220 am Zusatzelement 213 mit einer Anlagefläche 221 am Ring 202 zusammen, so daß sich der Abstand A von beispielsweise 30 mm zwischen der Anlagefläche 221 und dem freien Ende des Stiftes 208 ergibt.

Bei der Anschlußvorrichtung 219 (Fig. 20) wirkt eine als Außengewinde ausgebildete Spannfläche 222 mit der Anlagefläche 221 zusammen, so daß sich ein Abstand B von beispielsweise 10 mm zwischen dieser Anlagefläche und dem freien Ende des Stiftes 208 ergibt. Hierbei verschiebt sich der Ventilsitz teleskopartig im Anschlußstutzen 204, wodurch sich eine Abstands-Ausgleichsvorrichtung ergibt.

Wird das Ventil der Fig. 19 und 20 in eine Heizungsanlage eingebaut, so nehmen das Anschlußelement 206 und das Zusatzelement 213 automatisch die Form der Anschlußvorrichtung 218 (Fig. 19) ein, weil der Zulaufdruck im Anschlußstutzen 204 den Ventilsitz 210 und damit das Anschlußelement 206 in die axial äußere Stellung drückt. Soll nun aber ein Betätigungsaufsatz vom zweiten Typ angebracht werden, führt man diesen in axialer Richtung zu. Hierbei wird der Stift 208 mitgenommen und drückt das Verschlußstück 211 gegen den Ventilsitz 210. Dieser schiebt den Ventilsitz 210 und damit das Anschlußelement 206 in die in Fig. 20 veranschaulichte Stellung; wo eine Raste 223 am Ventilsitz 210 hinter die Stirnfläche des Anschlußstutzens 204 greift. Sollte die so gewonnene zweite Anschlußvorrichtung 219 versehentlich eingenommen worden sein, kann nach Ausbau des Ventils die Verrastung wieder gelöst werden.

Zur Bildung einer kᵥ-Voreinstellungs-Vorrichtung bildet eine Buchse 224 zusammen mit einem Fortsatz 225 des Ventilsitzes 210 einen Spalt 226. Die Buchse 224 ist über ein Gewinde 227 mit dem Anschlußelement 206 verbunden, so daß sich durch eine Drehung der Buchse 224 relativ zum Anschlußelement 206 eine Axialverlagerung und damit eine Änderung der Spalthöhe ergibt. Gedreht werden kann die Buchse 224 mit Hilfe eines Betätigungsorgans 228, das seine Drehbewegung über den Stift 208, die Ventilstange 212 sowie eine Drehkupplung 229, beispielsweise mit Mehrkantquerschnitt, überträgt. Da das Anschlußelement 206 unter Überwindung der Reibung der O-Ringdichtungen im Gehäuse 200 drehbar ist, kann man die Voreinstellvorrichtung so einstellen, daß die Referenzlinie für eine Skaleneinstellung an einer dem Betätigungsorgan 228 benachbarten Platte 230 gut sichtbar ist.

Die Drehsicherung der Betätigungsaufsätze kann auf verschiedene Art und Weise erfolgen. In vorliegendem Ausführungsbeispiel sind Drehsicherungselemente 231 am Zusatzelement 213 für den ersten Typ von Betätigungsaufsätzen und Drehsicherungselemente 232 an der Platte 230 für einen zweiten Typ eines Betätigungsaufsatzes vorgesehen.

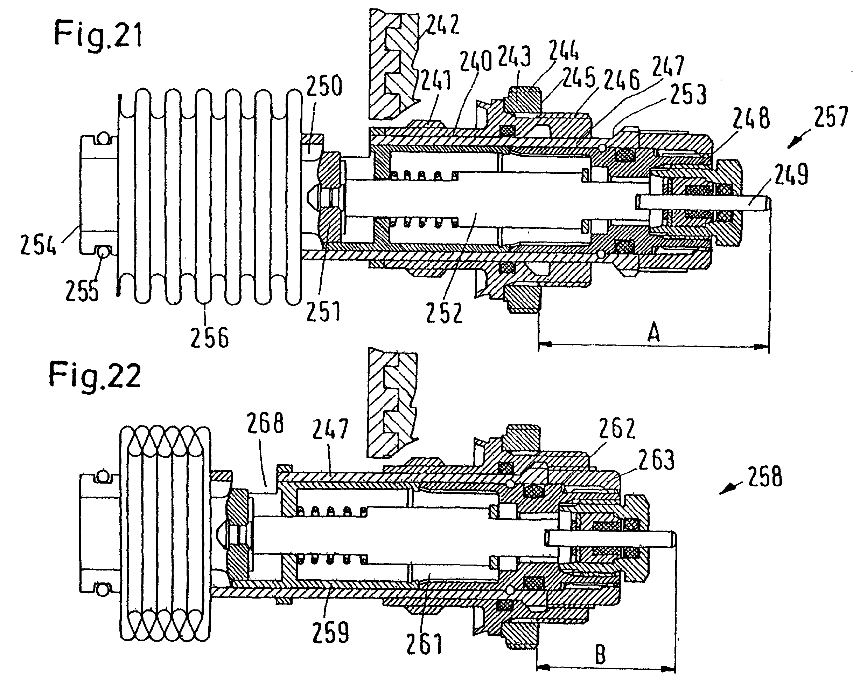

Das Ventil nach den Fig. 21 und 22 weist ein Gehäuse 240 auf, das mittels eines Gewindes 241 in einen nur angedeuteten Heizkörper 242 einschraubbar ist. Das Gehäuse 240 trägt ein ringförmiges Zusatzelement 243, das an der Außenseite eine als Gewinde ausgebildeten Spannfläche 244 und an der Stirnseite eine Anlagefläche 245 aufweist. Das Zusatzelement 243 ist längs einer Gewindebahn 246 axial verstellbar, kann aber vorzugsweise auch einstückig mit dem Gehäuse 240 ausgebildet sein.

Ein Anschlußelement 247 ist abgedichtet im Gehäuse 240 geführt. Es trägt eine Dichtvorrichtung 248 für einen nach außen tretenden Stift 249 sowie einen Ventilsitz 250. Dieser wirkt mit einem Verschlußstück 251 zusammen, das über eine Ventilstange 252 mit dem Stift 249 gekuppelt ist. Am Anschlußelement 247 ist eine konusförmige Spannfläche 253 ausgebildet.

Wiederum ist ein Anschlußstutzen 254 mit einer Ringdichtung 255 vorgesehen. Der Anschlußstutzen 254 ist über ein Rohr 256 mit dehnbarer Wand, hier ein Wellrohr, mit dem Ventilsitz 250 verbunden. Dieses Rohr bildet eine Abstands-Ausgleichsvorrichtung, die es erlaubt, das Anschlußelement 247 über den gesamten Weg zwischen der Stellung der Fig. 21 und der Stellung der Fig. 22 zu verschieben, dabei aber den Abstand zwischen dem Gewinde 241 des Gehäuses 240 und der Ringdichtung 255 konstant zu halten.

Wie ein Vergleich der Fig. 21 und 22 zeigt, gibt es eine erste Stellung (Anschlußvorrichtung 257), in der die Spannfläche 253 frei liegt und eine zweite Stellung (Anschlußvorrichtung 258) in der diese Ringfläche durch den Ring 243 überdeckt ist. Dieses Ineinanderschieben ist möglich, weil das Gehäuse 240 nach innen ragende Rippen aufweist, die in entsprechende Axialnuten des Anschlußelements 200 und 247 eingreifen. Durch axiales Verstellen des Zusatzelements 243 läßt sich der Abstand zwischen Anlagefläche 245 und freiem Ende des Stiftes 249 noch weiter verkürzen. In diesem Fall dient der Ring als Zusatzelement.

Eine kᵥ-Voreinstellungs-Vorrichtung weist eine innerhalb des Anschlußelements 247 angeordnete Hülse 259 auf, die, ebenso wie das Anschlußelement 247, einen seitlichen Ausschnitt aufweist, so daß sich eine verstellbare Drosselöffnung 268 ergibt. Die Hülse 259 ist über eine Drehkupplung 261 mit einem Dreheinsatz 262 versehen, der durch ein Betätigungsorgan 263 relativ zum Anschlußelement 247 gedreht werden kann.

Auch bei dieser Konstruktion wirkt sich der Zulaufdruck derart auf das Anschlußelement aus, daß sich bei eingebautem Ventil automatisch die Stellung der Fig. 21 einstellt. Mit geringer Kraft kann dann das Anschlußelement in die in Fig. 22 gezeigte Stellung gedrängt und dort durch eine Überwurfmutter, deren Innenflansch an der Anlagefläche 245 anliegt, festgehalten werden.

## Patentansprüche

1. Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung, die eine zum Befestigen eines Betätigungsaufsatzes geeignete erste Form hat, **dadurch gekennzeichnet, daß** die Anschlußvorrichtung mindestens ein relativ zum Gehäuse (10; 40; 80; 110; 150; 170; 200; 240) in Richtung der Stiftachse verstellbares Anschlußelement (22; 48; 95; 119; 158, 163, 172, 183; 206; 247) aufweist und durch Verstellung dieses mindestens einen Anschlußelements eine zum Befestigen eines zweiten Typs eines Betätigungsaufsatzes geeignete zweite Form annimmt.

2. Ventil nach Anspruch 1, **dadurch gekennzeichnet, daß** beide Formen eine Anlagefläche (20; 46; 97; 122; 162; 182; 221; 245) aufweisen, von denen die Anlagefläche der ersten Form einen größeren Abstand (A) vom freien Ende des Stifts (18; 53; 91; 116; 156; 178; 208; 249) hat als die Anlagefläche der zweiten Form.

3. Ventil nach Anspruch 1 oder 2, **dadurch gekennzeichnet, daß** beide Formen je einen der Anlagefläche (20; 46; 97; 122; 162; 182; 208; 249) zugeordneten Spannbereich aufweisen, der bei der ersten Form durch eine Konusfläche (19; 56; 96; 121; 161; 181; 220; 253) kleineren Außendurchmessers und bei der zweiten Form durch ein Außengewinde (24; 45; 101; 123; 165; 184; 220; 244) größeren Durchmessers gebildet ist.

4. Ventil nach einem der Ansprüche 1 bis 3, **dadurch gekennzeichnet, daß** ein äußeres Anschlußelement (22; 183; 243), das eine in beiden Formen wirksame Anlagefläche (20; 182; 245) trägt, an der Außenseite des Gehäuses (10; 170; 240) geführt ist.

5. Ventil nach einem der Ansprüche 1 bis 3, **dadurch gekennzeichnet, daß** ein äußeres Anschlußelement (100; 163), das eine in beiden Formen wirksame Anlagefläche (97; 162) trägt, an der Innenseite einer Gehäusewand vergrößerten Durchmesser geführt ist.

6. Ventil nach einem der Ansprüche 3 bis 5, **dadurch gekennzeichnet, daß** das äußere Anschlußelement (22; 100; 163) auch das den Spannbereich der zweiten Form bildende Außengewinde (24; 101; 165; 244) aufweist.

7. Ventil nach einem der Ansprüche 1 bis 6, **dadurch gekennzeichnet, daß** ein inneres Anschlußelement (95; 158; 172; 206; 247), das mit der Dichtvorrichtung (92; 157; 179; 207; 248) verbunden ist, an der Innenseite des Gehäuses (80; 150; 170; 200; 240) geführt ist.

8. Ventil nach Anspruch 7, **dadurch gekennzeichnet, daß** das innere Anschlußelement (48; 95; 158; 172; 206; 247) die den Spannbereich der ersten Form bildende Konusfläche (56; 96; 161; 181; 220; 253) aufweist.

9. Ventil nach Anspruch 7 oder 8, **dadurch gekennzeichnet, daß** der Stift (91) über eine Ausgleichskupplung (89; 133) mit dem Verschlußstück (85; 113) verbunden ist.

10. Ventil nach einem der Ansprüche 3 bis 9, **dadurch gekennzeichnet, daß** die Konusfläche (19) in festem Abstand zur Dichtvorrichtung (17) am Gehäuse (10) ausgebildet sind und ein äußeres Anschlußelement (21), das das Außengewinde (24) und die beiden Formen gemeinsame Anlagefläche (20) aufweist, das einzige verstellbare Anschlußelement bildet.

11. Ventil nach einem der Ansprüche 3 bis 9, **dadurch gekennzeichnet, daß** am Gehäuse (40) das Außengewinde (44) und die in beiden Formen wirksam Anlagefläche (46) ausgebildet sind und ein inneres Anschlußelement (48), das die Konusfläche (56) in festem Abstand zur Dichtvorrichtung (52) trägt, das einzige verstellbare Anschlußelement bildet.

12. Ventil nach einem der Ansprüche 1 bis 11, **dadurch gekennzeichnet, daß** der Verstellweg des mindestens einen Anschlußelements (206) durch Anschläge (214 bis 217) begrenzt ist.

13. Ventil nach einem der Ansprüche 1 bis 12, **dadurch gekennzeichnet, daß** das mindestens eine verstellbare Anschlußelement (48; 119) so ausgelegt ist, daß die Anschlußvorrichtung eine dritte Form zum Befestigen eines dritten Typs eines Betätigungsaufsatzes annimmt.

14. Ventil nach den Ansprüchen 12 und 13, **dadurch gekennzeichnet, daß** das mindestens eine Anschlußelement (4; 119) in einer Zwischenstellung des Verstellwegs arretierbar ist.

15. Ventil nach einem der Ansprüche 1 bis 14, **dadurch gekennzeichnet, daß** eine Sperrvorrichtung die Verstellbewegung des mindestens einen Anschlußelements (22) von der einen zur anderen Form zuläßt, die Rückbewegung dagegen sperrt.

16. Ventil nach einem der Ansprüche 1 bis 15, **dadurch gekennzeichnet, daß** das Gehäuse Profilierungen zur Drehsicherung des Betätigungsaufsatzes aufweist, die sowohl dem ersten als auch dem zweiten Typ des -Betätigungsaufsatzes angepaßt sind.

17. Ventil nach Anspruch 16, **dadurch gekennzeichnet, daß** bei den Drehsicherungs-Profilierungen ein Außensechskant (190) und eine Anzahl von achsparallelen Rillen (189) kombiniert sind.

## Claims

1. Valve, particularly a thermostatic valve for heating systems, with a housing, a valve seat, a closing element, operable by means of a pin led to the outside through a sealing arrangement, and with a connecting device, having a suitable first shape for the fixing of an operating element, **characterised in that** the connecting device has at least one connecting element (22; 48; 95; 119; 158, 163, 172, 183; 206; 247), which is adjustable in relation to the housing (10; 40; 80; 110; 150; 170; 200; 240) in the direction of the pin axis, an adjustment of this at least one connecting element making the connecting device assume a second shape suitable for the fitting of a second type of operating element.

2. Valve according to claim 1, **characterised in that** both shapes have a stop (20; 46; 97; 122; 162; 182; 221; 245), the stop of the first shape having a larger distance from the free end of the pin (18; 53; 91; 126; 156; 118; 208; 249) than the stop of the second shape.

3. Valve according to claim 1 or 2, **characterised in that** each of the two shapes has a tightening area allocated to the stop (20; 46; 97; 122; 162; 182; 221; 245), the tightening area of the first shape being a cone surface (19; 56; 96; 121; 181; 220; 253) with a smaller outer diameter and that of the second shape being an external thread (24; 45; 101; 123; 184; 220; 244) with a larger diameter.

4. Valve according to one of the claims 1 to 3, **characterised in that** an external connecting element (22; 183; 243) having a stop (20; 182; 245), which is effective in both shapes, is guided on the outside of the housing (10; 170; 240).

5. Valve according to one of the claims 1 to 3, **characterised in that** an external connecting element (100; 163), having a stop (97; 162), which is effective in both shapes, is led (guided??) on the inside of a housing wall with an increased diameter.

6. Valve according to one of the claims 3 to 5, **characterised in that** the external connecting element (22; 100; 163) also carries the external thread (24; 101; 165; 244) forming the tightening area of the second shape.

7. Valve according to one of the claims 1 to 6, **characterised in that** an internal connecting element (95; 158; 172; 206; 247), which is connected with the sealing device (92; 157; 179; 207; 248), is guided on the inside of the housing (80; 150; 170; 200; 240).

8. Valve according to claim 7, **characterised in that** the internal connecting element (48; 95; 158; 172; 206; 247) carries the cone surface (56; 96; 161; 181; 220; 253) forming the tightening area of the first shape.

9. Valve according to claim 7 or 8, **characterised in that** the pin (91) is connected with the closing element (85; 113) via a balance coupling (89; 133).

10. Valve according to one of the claims 3 to 9, **characterised in that** the cone surface (19) is made at a fixed distance to the sealing device (17) on the housing (19), and an external connecting element (21) carrying the external thread (24) and the common stop (20) for the two shapes forms the only adjustable connecting element.

11. Valve according to one of the claims 3 to 9, **characterised in that** the external thread (44) and the stop (46) effective in both shapes are formed on the housing (40) and an internal connecting element (48) carrying the cone surface (56) at a fixed distance to the sealing device (52) forms the only adjustable connecting element.

12. Valve according to one of the claims 1 to 11, **characterised in that** the adjustment travel of at least one connecting element (206) is limited by stops (214 to 217).

13. Valve according to one of the claims 1 to 12, **characterised in that** at least one of the adjustable connecting elements (48; 119) is dimensioned so that the connecting device assumes a third shape for the fixing of a third type of operating element.

14. Valve according to the claims 12 and 13, **characterised in that** at least one of the connecting elements (4; 119) can be locked in an intermediary position of the adjustment travel.

15. Valve according to one of the claims 1 to 14, **characterised in that** a blocking device permits the adjustment movement of at least one of the connecting elements (22) from one shape to the other, however blocks the return movement.

16. Valve according to one of the claims 1 to 15, **characterised in that** the housing has profilings for rotation protection of the operating element, the profilings being adapted to both the first and the second type of operating elements.

17. Valve according to claim 16, **characterised in that** the rotation protection profilings are made up of a combination of a hexagon nut (190) and a number of axis parallel grooves (189).

## Revendications

1. Vanne, en particulier vanne thermostatique pour installations de chauffage, comportant un boîtier, un siège de vanne, un obturateur qui est à actionner au moyen d'une tige menée vers l'extérieur à travers un dispositif d'étanchéité, et comportant un dispositif de raccordement qui présente une première forme appropriée à la fixation d'une garniture d'actionnement, **caractérisée en ce que** le dispositif de raccordement comprend au moins un élément de raccordement (22 ; 48 ; 95 ; 119 ; 158, 163, 172, 183 ; 206 ; 247) déplaçable en direction de l'axe de tige par rapport au boîtier (10 ; 40 ; 80 ; 110 ; 150 ; 170 ; 200 ; 240) et adopte, par déplacement dudit au moins un élément de raccordement, une deuxième forme appropriée à la fixation d'un deuxième type de garniture d'actionnement.

2. Vanne selon la revendication 1, **caractérisée en ce que** les deux formes présentent des surfaces d'appui respectives (20 ; 46 ; 97 ; 122 ; 162 ; 182 ; 221 ; 245) dont la surface d'appui de la première forme présente une distance (A) à l'extrémité libre de la tige (18 ; 53 ; 91 ; 116 ; 156 ; 178 ; 208 ; 249) qui est superieure à celle de la surface d'appui de la deuxième forme.

3. Vanne selon la revendication 1 ou 2, **caractérisée en ce que** les deux formes présentent chacune une zone de serrage associée à la surface d'appui (20 ; 46 ; 97 ; 122 ; 162 ; 182 ; 208 ; 249), zone qui, dans le cas de la première forme, est formée par une surface conique (19 ; 56 ; 96 ; 121 ; 161 ; 181 ; 220 ; 253) de petit diamètre extérieur et qui, dans le cas de la deuxième forme, est formée un filetage (24 ; 45 ; 101 ; 123 ; 165 ; 184 ; 220 ; 244) de grand diamètre.

4. Vanne selon l'une des revendications 1 à 3, **caractérisée en ce qu'**un élément de raccordement extérieur (22 ; 183 ; 243) qui porte une surface d'appui (20 ; 182 ; 245) agissant dans les deux formes est guidé sur le côté extérieur du boîtier (10 ; 170 ; 240).

5. Vanne selon l'une des revendications 1 à 3, **caractérisée en ce qu'**un élément de raccordement extérieur (100 ; 163) qui porte une surface d'appui (97 ; 162) agissant dans les deux formes est guidé sur le côté intérieur d'une paroi de boîtier de diamètre agrandi.

6. Vanne selon l'une des revendications 3 à 5, **caractérisée en ce que** l'élément de raccordement extérieur (22 ; 100 ; 163) présente également le filetage (24 ; 101 ; 165 ; 244) formant la zone de serrage de la deuxième forme.

7. Vanne selon l'une des revendications 1 à 6, **caractérisée en ce qu'**un élément de raccordement intérieur (95 ; 158 ; 172 ; 206 ; 247) qui est relié au dispositif d'étanchéité (92 ; 157 ; 179 ; 207 ; 248) est guidé sur le côté intérieur du boîtier (80 ; 150 ; 170 ; 200 ; 240).

8. Vanne selon la revendication 7, **caractérisée en ce que** l'élément de raccordement intérieur (48 ; 95 ; 158 ; 172 ; 206 ; 247) présente la surface conique (56 ; 96 ; 161; 181 ; 220 ; 253) formant la zone de serrage de la première forme.

9. Vanne selon la revendication 7 ou 8, **caractérisée en ce que** la tige (91) est reliée à l'obturateur (85 ; 113) via un accouplement de compensation (89 ; 133).

10. Vanne selon l'une des revendications 3 à 9, **caractérisée en ce que** la surface conique (19) est réalisée à une distance fixe au dispositif d'étanchéité (17) sur le boîtier (10) et **en ce qu'**un élément de raccordement extérieur (21) qui présente le filetage (24) et une surface d'appui (20) commune aux deux formes constitue le seul élément de raccordement déplaçable.

11. Vanne selon l'une des revendications 3 à 9, **caractérisée en ce que** sur le boîtier (40) sont réalisés le filetage (44) et la surface d'appui (46) efficace dans les deux formes, et **en ce qu'**un élément de raccordement intérieur (48) qui porte la surface conique (56) à une distance fixe au dispositif d'étanchéité (52) constitue le seul élément de raccordement déplaçable.

12. Vanne selon l'une des revendications 1 à 11, **caractérisée en ce que** la course de déplacement dudit au moins un élément de raccordement (206) est limitée par des butées (214 à 217).

13. Vanne selon l'une des revendications 1 à 12, **caractérisée en ce que** ledit au moins un élément de raccordement déplaçable (48 ; 119) est conçu de telle sorte que le dispositif de raccordement adopte une troisième forme pour la fixation d'un troisième type de garniture d'actionnement.

14. Vanne selon les revendications 12 et 13, **caractérisée en ce que** ledit au moins un élément de raccordement (4 ; 119) est susceptible d'être arrêté dans une position intermédiaire de la course de déplacement.

15. Vanne selon l'une des revendications 1 à 14, **caractérisée en ce qu'**un dispositif de blocage permet le mouvement de déplacement dudit au moins un élément de raccordement (22) d'une forme vers l'autre, mais bloque le mouvement en retour.

16. Vanne selon l'une des revendications 1 à 15, **caractérisée en ce que** le boîtier présente des profilages pour le blocage anti-rotation de la garniture d'actionnement, qui sont adaptés aussi bien au premier qu'au deuxième type de garniture d'actionnement.

17. Vanne selon la revendication 16, **caractérisée en ce que** dans les profilages de blocage anti-rotation, un relief à six pans (190) et un certain nombre de rainures (189) parallèles à l'axe sont combinés entre eux.
